# EUROPEAN PATENT APPLICATION

(11) **EP 2 222 082 A1**
(43) Date of publication of application: **25.08.2010**
(21) Application number: 10153628.2
(22) Date of filing: 15.02.2010
(51) Int. Cl.: H04N 7/167, G06F 21/00, G06Q 30/00

(54) **Methods and devices for digital content protection**

(30) Priority: 19.02.2009 EP 09305163
(71) Applicant: Thomson Licensing, 92130 Issy-les-Moulineaux (FR)
(72) Inventor: Courtay, Olivier, 92443, Issy-Les-Moulineaux (FR)
(74) Representative: Ruellan-Lemonnier, Brigitte

(57) **Abstract**

Methods and devices for controlling access to digital content. The digital content is split into at least one code part (212; 222) and one scrambled part (214; 224). A codec (129) of a user device (120) finds (530) that the first part is not scrambled and plays it. The first part (212) comprises code to be retrieved and entered (540) by a user. Using the input code, the codec (129) generates (550) a corresponding scrambling key, possibly also using additional information such as a current time. The codec (129) then detects (560) an upcoming scrambled part and uses the generated scrambling key to descramble (570) and display the scrambled section. In a preferred embodiment, instead of entering part of the code itself, the codec (129) generates, using e.g. metadata and time, to generate part of the code to display to the user.

## Description

### FIELD OF THE INVENTION

The present invention relates generally to digital content protection, and in particular to access control to scrambled audiovisual content.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

US 5,555,308 teaches a system that provides access to protected digital content to a user, by putting information necessary to access the digital content in a user accessible content part that precedes the protected digital content. The system may for example be employed by putting characters inside a commercial message, the characters then being input by a user so as to generate a code necessary for descrambling of scrambled content. WO 2005/025220, US 2007/0224755, CA 2182887 and US 2007/0124201 teach similar systems.

The taught system has a notable drawback: while the system provides countermeasures to automatic input of the characters, it does nothing to prevent replay of the characters, such as may be done if the content is downloadable over the Internet.

The most straightforward solution to this problem is to ensure that each copy of the digital content is scrambled using different scrambling keys. However, this solution may necessitate much scrambling if the digital content is to be provided many times.

It will therefore be appreciated that there is a need for a content protection system that overcomes at least some of the drawbacks of the prior art. This invention provides such a solution.

### SUMMARY OF THE INVENTION

In a first aspect, the invention is directed to a method of accessing protected digital content, that is made up of a code part and a scrambled part. A user device receives a code part that, when played, renders a first code from which a scrambling key for the scrambled part may be obtained. The user device renders the code part including the first code. The code part further comprises auxiliary code information readable by the user device and the user device generates a second code from the auxiliary information and from information resident in the user device. The user device then receives input from a user, the input corresponding to the first code, and also the second code, and generates a scrambling key from the first code and the second code. The scrambled part is then received and descrambled using the scrambling key and played.

In a first preferred embodiment, a codec of the user device detects that the received code part is unscrambled and renders it.

In a second preferred embodiment, the second code is rendered to the user and the scrambling key is generated from the second code input by the user.

In a third preferred embodiment, the resident information comprises at least one from the group of: a hardware fingerprint of the user device, a user identifier, a current time of the user device, and an address of delivery of the user device.

In a second aspect, the invention is directed to a method of generating protected digital content, the digital content being made up of a code part and a content part. A scrambling key for the content part is obtained; the content part scrambled using the scrambling key; a first code, a second code and user device information from which the scrambling key may be generated are obtained; and the first code is inserted in the code part as audiovisual data and the second code is inserted as auxiliary code information.

In a third aspect, the invention is directed to a device for accessing protected digital content being made up of a code part and a scrambled part. The device comprises means for receiving a code part that, when played, renders a first code from which a scrambling key for the scrambled part may be obtained; means for rendering the code part including the first code; means for receiving input from a user, the input corresponding to the first code; means for generating a scrambling key from the first code; means for receiving the scrambled part; and means for descrambling and playing the scrambled part using the scrambling key. The code part further comprises auxiliary code information readable by the user device and the device further comprises means for generating a second code from the auxiliary information and from information resident in the user device); and means for receiving the second code. The scrambling key generation means is adapted to generate the scrambling key also from the second code.

In a fourth aspect, the invention is directed to a device for generating protected digital content, the digital content being made up of a code part and a content part. The device comprises means for obtaining a scrambling key for the content part; means for scrambling the content part using the scrambling key; means for obtaining a first code, a second code and user device information from which the scrambling key may be generated; and means for inserting in the code part the first code as audiovisual data and the second code as auxiliary code information.

### BRIEF DESCRIPTION OF THE DRAWINGS

Preferred features of the present invention will now be described, by way of nonlimiting example, with reference to the accompanying drawings, in which:
Figure 1 illustrates exemplary digital content according to a preferred embodiment of the present invention;
Figure 2 illustrates exemplary digital content according to a preferred embodiment of the present invention;
Figure 3 illustrates a content protection method according to a preferred embodiment of the present invention; and
Figure 4 illustrates a method of content reception according to a preferred embodiment of the present invention.

### PREFERRED EMBODIMENT OF THE INVENTION

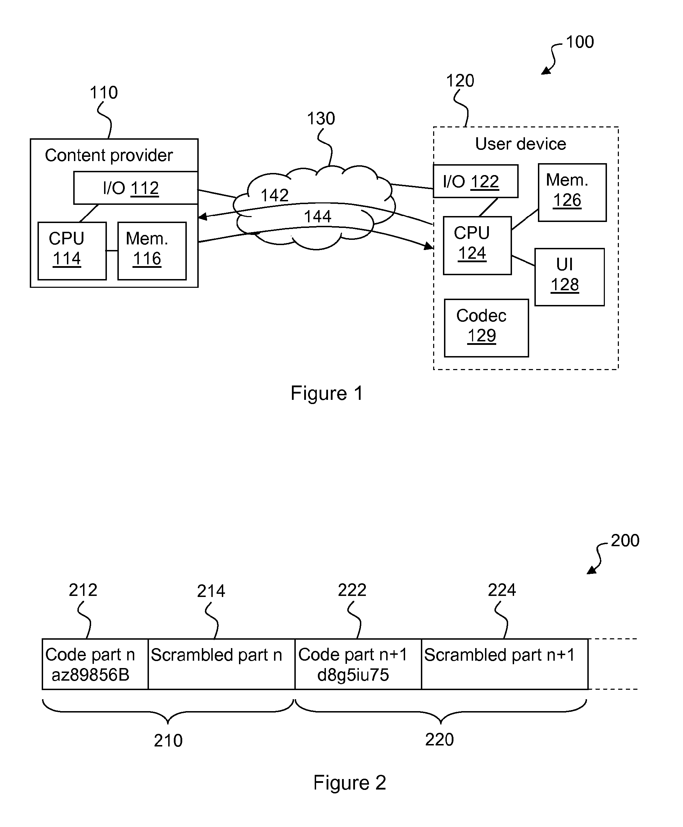

Figure 1 illustrates a system 100 for digital audiovisual content protection and delivery according to a preferred embodiment of the present invention. The content protection and delivery system 100 comprises a content provider 110 and a user device 120 functionally interconnected by a network 130. The content provider 110 and the user device 120 each comprise at least one communication interface 112, 122, at least one processor 114, 124 (hereinafter "processor"), and at least one memory 116, 126. The user device 110 further comprises a user interface 128. The user device 120 is adapted to send, via the communication interface 122, a request 142 for an item of content to the content provider 110, which, if the request is granted, is adapted to deliver 144 the content item, suitably protected as will be described hereinafter, to the user device 120. In addition, the user device 120 also comprises a coder/decoder (codec) 129 used to decode content, as will further be explained hereinafter.

Figure 2 illustrates exemplary digital content according to a preferred embodiment of the present invention. The exemplary digital content 200 as received by the user device 120 comprises a number of sequential blocks 210, 220. The number of blocks may be as low as one and there is virtually no upper limit to the number of blocks; the number is preferably at least roughly dependent on the total rendering time of the content.

Each block 210, 220 comprises a code section 212, 222 and a scrambled section 214, 224. A code section 212, 222 is unscrambled and may thus be rendered to a user; it may comprise audio, video or a combination of audio and video. The code section 212, 222 also comprises a first code part that is comprised in the audiovisual content to be rendered to the user. The code section 212, 222 also comprises metadata comprising information to be used by the user device 120 to generate a second code part to be rendered to the user. For example, code section N 212 comprises a code "az89856B" of which "az89" is the first code part and "856B" is comprised in the metadata for generation of the second code part.

The information in the metadata is read by the user device 120 and combined with personalisation information, such as for example the, possibly processed for example hashed, time of an internal clock (not shown) of the user device 120 or of an external device, a hardware fingerprint of the user device 120, and a combination thereof. The function used to combine the information may be as simple as a concatenation or an XOR, but it is preferred that a more complex function, such as the use of a suitable encryption function, is used. The result gives the second code part that is rendered to the user while the code section is rendered, for example by superimposing the resulting characters on the user interface 128. As an example, the information in the metadata of the first code section 212, "856B", is used to generate the second code part "8f2w".

An advantage of this arrangement is that the first code part is not readable from the metadata, while the second code part can ensure that the descrambling key may not easily be downloadable from the internet. It will be appreciated that countermeasures may be taken against the automatic detection of the rendition of the first code part, e.g. by employing so-called captcha or the like.

It should be noted that the length of the code is not limited to eight alpha-numerical characters and that it may be chosen by the system provider.

As mentioned, each block also comprises a scrambled section 214, 224. The scrambled section 214, 224 is scrambled using a key that is identical to or derived from the code resulting from a combination, such as for example a concatenation, of the first code part and the second code part of the preceding code section 212, 222. As such, scrambled part N 214 is scrambled using a key based on az898f2w. The relation between code and key may be identity, but it is also possible to process the code to obtain the key, for example by applying a hash function to the code.

Naturally, as hashing is a one-way function, then the content provider must scramble the scrambled section using a hash of the code to be inserted in the content for later input by the user.

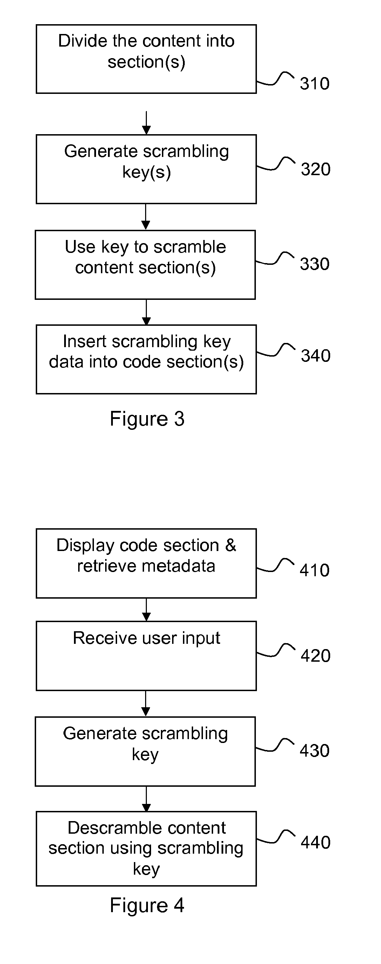

Figure 3 illustrates a content protection method according to a preferred embodiment of the present invention. The content provider splits the content into N content sections (where N may be as low as 1) and obtains the audiovisual information for N code sections; step 310. It will be appreciated that the audiovisual information may be reused for more than one code section.

In step 320, a scrambling key is generated for each content section. The scrambling key may be based on information received from a user device, possibly in the request 142 for content or from already stored information relating to the user device, but it may in addition also be based on further factors such as the present time.

In step 330, the content sections are scrambled using the respective scrambling keys. The data necessary for the intended user device (or, in at least one embodiment, user devices) to create the scrambling key is generated and put into the corresponding code sections in step 340. It is advantageous that the scrambling key may not be directly obtained from the data, but that the data must be transformed in order to obtain the scrambling key, for example by SHA-1 hashing of the data. In addition, metadata is also used to indicate whether a certain section of content is scrambled or not. Such metadata is preferably inserted at the end of the preceding section; in the preferred embodiment, a metadata signal is inserted at the end of a code section to indicate that the following section, i.e. a content section, is scrambled and another metadata signal is inserted at the end of the content section to indicate that the following code section is not scrambled.

It should be noted that the method could also be performed in an iterative manner, in which a single scrambling key is generated in step 320, followed by the scrambling of the corresponding content section in step 330 and generation and insertion of the scrambling key creation data in step 340. The iterative variant could also include the splitting of the content, separating one content section at a time. If the scrambled content section is the last content section, then the method ends; otherwise, the method returns to step 320 for the next content section. Naturally, steps 330 and 340 may easily be performed in reversed order.

It should be noted that the splitting of the content may be performed in at least two different ways. A first way is to cut out a section of the content and then further separate the section into a code section and a content section. A second way is to directly cut out the content section, which means that the code section is indirectly generated at the same time.

Figure 4 illustrates a method of content reception according to a preferred embodiment of the present invention. The user device first receives (not shown) at least one content item, possibly by first receiving a code section and then a content section. As soon as at least part of the code section is received, the user device may begin its display. The user device displays the code section - including the second code part of the code section - and retrieves the metadata of the code section, step 410. As already mentioned, the metadata may be used to generate a first code part.

It will be appreciated that the user device may receive the entire content before playing any of it.

In step 420, the user device receives user input. In order for the user device to be able to correctly descramble the content, the user must enter the correct input, i.e. the second code part, as displayed.

The second code part as input by the user and the first code part generated by the metadata are combined to generate a scrambling key, step 430, which may be used to descramble the content part corresponding to the code part, step 440.

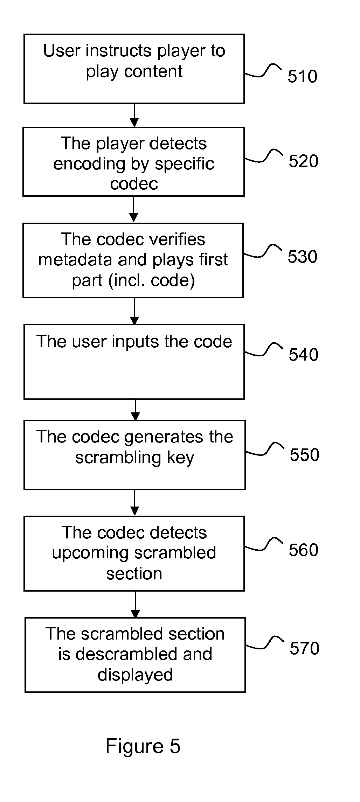

Figure 5 illustrates an exemplary use of the invention. The user instructs 510 the player to play an item of content. The player detects 520, preferably using auxiliary data, that the content was encoded using a particular codec and thus needs to be decoded using a compatible codec. The codec checks 530 metadata in the content, finds that the first part (i.e. a first code part) is not scrambled, and plays the first part.

The first code part comprises code to be retrieved and entered 540 by the user. Using the input code, the codec generates 550 the corresponding scrambling key, possibly also using additional information - such as information in the metadata, time, and/or a hardware fingerprint - to do so. The codec then detects 560 that an upcoming scrambled section (i.e. a content section). The skilled person will appreciate that the given example uses parallel input by the user, but it is also possible to for instance first detect that the upcoming section is scrambled (step 560), pause while the user inputs the code (step 540) and then generate the scrambling key (step 550). The generated scrambling key is then used to descramble 570 and display the scrambled section.

Naturally, the steps are performed a plurality of times if more than one content section is to be rendered.

In case additional information is used to generate the scrambling key, this may for example be done by splitting the code for a code section, e.g. "az89856B", into two (or more) parts, e.g. "az89" and "856B". The first part may be for the user to input, while the second part may be a seed to combine with the time to render a partial result that is combined with the user input so as to render a total result that, in a preferred embodiment, is further processed, e.g. by hashing or the use of another suitable cryptographic algorithm.

It is however also possible to display the first code part (e.g. "az89") and to combine the second part of the code (e.g. "856B") with for instance the time so as to generate a second displayed code part (e.g. "8F2W"). The user is then expected to input both code parts that together make up the total code (e.g. "856B8F2W") for the next content section.

While the preferred embodiment described a method in which a user device requests digital content, the skilled person will appreciate that the method may also be used for broadcast or multicast to a plurality of user devices without significant changes. In particular in this variant embodiment is it preferred personalize a code part with, for example, the hardware fingerprint, a user identifier or an address of delivery, such as MAC address.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference signs appearing in the claims are by way of illustration only and shall have no limiting effect on the scope of the claims.

## Claims

1. A method of accessing protected digital content, the protected digital content being made up of a code part (212; 222) and a scrambled part (214; 224), the method comprising the steps, at a user device (120) of:
- receiving a code part (212; 222) that, when played, renders a first code from which a scrambling key for the scrambled part (214; 224) may be obtained;
- rendering (410; 530) the code part (212; 222) including the first code;
- receiving (420; 540) input from a user, the input corresponding to the first code;
- generating (430; 550) a scrambling key from the first code;
- receiving the scrambled part (214; 224); and
- descrambling and playing (440; 570) the scrambled part (214; 224) using the scrambling key;
the method being **characterized in that** the code part (212; 222) further comprises auxiliary code information readable by the user device (120), **in that** the method further comprises the steps of:
generating a second code from the auxiliary information and from information resident in the user device (120);
wherein the scrambling key is generated also from the second code.

2. The method of claim 1, wherein a codec (129) of the user device (120) detects (530) that the received code part is unscrambled and renders it.

3. The method of claim 1, wherein the second code is rendered to the user and the scrambling key is generated from the second code input by the user.

4. The method of claim 1, wherein the resident information comprises at least one from the group of: a hardware fingerprint of the user device (120), a user identifier, a current time of the user device (120), and an address of delivery of the user device (120).

5. A method of generating protected digital content, the digital content being made up of a code part (212; 222) and a content part (214; 224), the method comprising the steps of:
- obtaining (320) a scrambling key for the content part (214; 224);
- scrambling (330) the content part (214; 224) using the scrambling key;
- obtaining a first code, a second code and user device information from which the scrambling key may be generated; and
- inserting (340) in the code part (212; 222) the first code as audiovisual data and the second code as auxiliary code information.

6. A device (120) for accessing protected digital content, the protected digital content being made up of a code part (212; 222) and a scrambled part (214; 224), the device (120) comprising:
- means (122) for receiving a code part (212; 222) that, when played, renders a first code from which a scrambling key for the scrambled part (214; 224) may be obtained;
- means (129) for rendering (410; 530) the code part (212; 222) including the first code;
- means (128) for receiving (420; 540) input from a user, the input corresponding to the first code;
- means (129) for generating (430; 550) a scrambling key from the first code;
- means (122) for receiving the scrambled part (214; 224); and
- means (129) for descrambling and playing (440; 570) the scrambled part (214; 224) using the scrambling key;
the device (120) being **characterized in that** the code part (212; 222) further comprises auxiliary code information readable by the user device (120), **in that** the device (120) further comprises:
- means (129) for generating a second code from the auxiliary information and from information resident in the user device (120);
wherein the scrambling key generation means (129) is adapted to generate the scrambling key also from the second code.

7. A device (110) for generating protected digital content, the digital content being made up of a code part (212; 222) and a content part (214; 224), the device (110) comprising:
- means (114) for obtaining (320) a scrambling key for the content part (214; 224);
- means (114) for scrambling (330) the content part (214; 224) using the scrambling key;
- means (114) for obtaining a first code, a second code and user device information from which the scrambling key may be generated; and
- means (114) for inserting (340) in the code part (212; 222) the first code as audiovisual data and the second code as auxiliary code information.
